# EUROPEAN PATENT SPECIFICATION

(11) **EP 3 848 876 B1**
(45) Date of publication and mention of the grant of the patent: **26.11.2025**
(21) Application number: 19858149.8
(22) Date of filing: 03.09.2019
(51) Int. Cl.: G06F 21/64, G06Q 20/38, G06Q 20/06, G06F 16/23, G06Q 30/018, G06Q 40/02

(54) **ELECTION METHOD AND APPARATUS FOR REPRESENTATIVE NODE DEVICE, COMPUTER DEVICE, AND STORAGE MEDIUM**
AUSWAHLVERFAHREN UND -VORRICHTUNG FÜR EINE REPRÄSENTATIVE KNOTENVORRICHTUNG, COMPUTERVORRICHTUNG UND SPEICHERMEDIUM
PROCÉDÉ ET APPAREIL D'ÉLECTION POUR DISPOSITIF DE NOEUD REPRÉSENTATIF, DISPOSITIF INFORMATIQUE ET SUPPORT D'INFORMATIONS

(30) Priority: 07.09.2018 CN 201811046270
(43) Date of publication of application: 14.07.2021
(73) Proprietor: Tencent Technology (Shenzhen) Company Limited, Shenzhen, Guangdong, 518057 (CN)
(72) Inventor: GUO, Rui, Shenzhen, Guangdong 518057 (CN); LI, Maocai, Shenzhen, Guangdong 518057 (CN); WANG, Zongyou, Shenzhen, Guangdong 518057 (CN); TU, Haitao, Shenzhen, Guangdong 518057 (CN); KONG, Li, Shenzhen, Guangdong 518057 (CN); ZHOU, Kaiban, Shenzhen, Guangdong 518057 (CN); YANG, Changqing, Shenzhen, Guangdong 518057 (CN); WANG, Nan, Shenzhen, Guangdong 518057 (CN); DING, Yong, Shenzhen, Guangdong 518057 (CN); SHI, Yifang, Shenzhen, Guangdong 518057 (CN)
(74) Representative: Novagraaf International SA
(86) International application number: PCT/CN2019/104159
(87) International publication number: WO 2020/048440

(56) References cited:
- CN-A- 106 878 071
- CN-A- 107 124 403
- CN-A- 107 395 353
- CN-A- 108 269 090
- CN-A- 109 034 813
- US-A1- 2015 310 424
- LI KEJIAO ET AL: "Proof of Vote: A High-Performance Consensus Protocol Based on Vote Mechanism & Consortium Blockchain", 2017 IEEE 19TH INTERNATIONAL CONFERENCE ON HIGH PERFORMANCE COMPUTING AND COMMUNICATIONS; IEEE 15TH INTERNATIONAL CONFERENCE ON SMART CITY; IEEE 3RD INTERNATIONAL CONFERENCE ON DATA SCIENCE AND SYSTEMS (HPCC/SMARTCITY/DSS), IEEE, 18 December 2017 (2017-12-18), pages 466 - 473, XP033321758, DOI: 10.1109/HPCC-SMARTCITY-DSS.2017.61
- NEO: "Election and Voting", 7 July 2017 (2017-07-07), XP055515992, Retrieved from the Internet <URL:http://docs.neo.org/en-us/node/gui/vote.html> [retrieved on 20181016]

## Description

This application claims priority to Chinese Patent Application No. 201811046270.0, titled "METHOD AND APPARATUS FOR ELECTING REPRESENTATIVE NODE DEVICE, COMPUTER DEVICE, AND STORAGE MEDIUM" filed with the Chinese Patent Office on September 7, 2018.

### FIELD

The present disclosure relates to the technical field of blockchain, and in particular to a method and an apparatus for electing a representative node device, a computer device, and a storage medium.

### BACKGROUND

In recent years, with the development of network technologies, a blockchain system is widely applied to life. The blockchain system may include multiple node devices. Each node device may store transaction data by utilizing blocks and connect the blocks sequentially in chronological order to form a chain data structure, so as to form a distributed account book in the blockchain system.

At present, node devices may generate a block through the following process. When a transaction occurs on any node device, the node device may record transaction data and broadcast the transaction data in a blockchain system, so that other node devices in the blockchain system receive the transaction data. After the node devices in the blockchain system receive the transaction data, the node devices may package the transaction data to generate a new block, and perform verification on the new block based on a consensus mechanism. After the new block is verified, each node device may add the new block to a blockchain configured on nodes.

In the foregoing process in which the node devices generate a block, a representative node device may be elected to replace all the node devices to generate a block, to improve working efficiency of the blockchain system. Any node device in the blockchain system may become the representative node device, node devices have different qualifications because the node devices are different in terms of performance or authority. In addition, there may be a malicious node device that constantly transmits erroneous information in the blockchain system. Once an unqualified node device or a malicious node device is elected as the representative node device, normal operation of the blockchain system is affected. In this case, there is an urgent need for a method for electing a representative node device that can ensure normal operation of the blockchain system.

LI KEJIAO ET AL, "Proof of Vote: A High-Performance Consensus Protocol Based on Vote Mechanism & Consortium Blockchain", 2017 IEEE 19TH INTERNATIONAL CONFERENCE ON HIGH PERFORMANCE COMPUTING AND COMMUNICATIONS; IEEE 15TH INTERNATIONAL CONFERENCE ON SMART CITY; IEEE 3RD INTERNATIONAL CONFERENCE ON DATA SCIENCE AND SYSTEMS (HPCC/SMARTCITY/DSS), IEEE, (20171218), concerns a Proof of Vote (POV) consensus algorithm which is coordinated by distributed notes controlled by consortium partners that come to a decentralized arbitration by voting, wherein different security identities for network participants are established.

### SUMMARY

The present invention concerns a method for electing a representative node device according to claim 1, and a blockchain system according to claim 7.

Details of one or more embodiments of the present disclosure are provided in the accompanying drawings and description below. Other features, objectives, and advantages of the present disclosure become apparent from the specification, the accompanying drawings, and the claims.

### BRIEF DESCRIPTION OF THE DRAWINGS

To describe the technical solutions of the embodiments of the present disclosure more clearly, the accompanying drawings required for describing the embodiments are described briefly hereinafter. Apparently, the accompanying drawings in the following description show only some embodiments of the present disclosure, and a person of ordinary skill in the art may derive other accompanying drawings from the accompanying drawings without creative efforts.
FIG. 1 is a schematic structural diagram of a blockchain system according to an embodiment of the present disclosure.
FIG. 2 is a flowchart of a method for electing a representative node device according to an embodiment of the present disclosure.
FIG. 3 is a flowchart of a qualification auditing process for a node device according to an embodiment of the present disclosure.
FIG. 4 is a schematic structural diagram of an apparatus for electing a representative node device according to an embodiment of the present disclosure.
FIG. 5 is a schematic structural diagram of a server according to an embodiment of the present disclosure.

### DETAILED DESCRIPTION OF EMBODIMENTS

To enable the objectives, technical solutions, and advantages of the present disclosure clearer, embodiments of the present disclosure are described in detail with reference to the accompanying drawings.

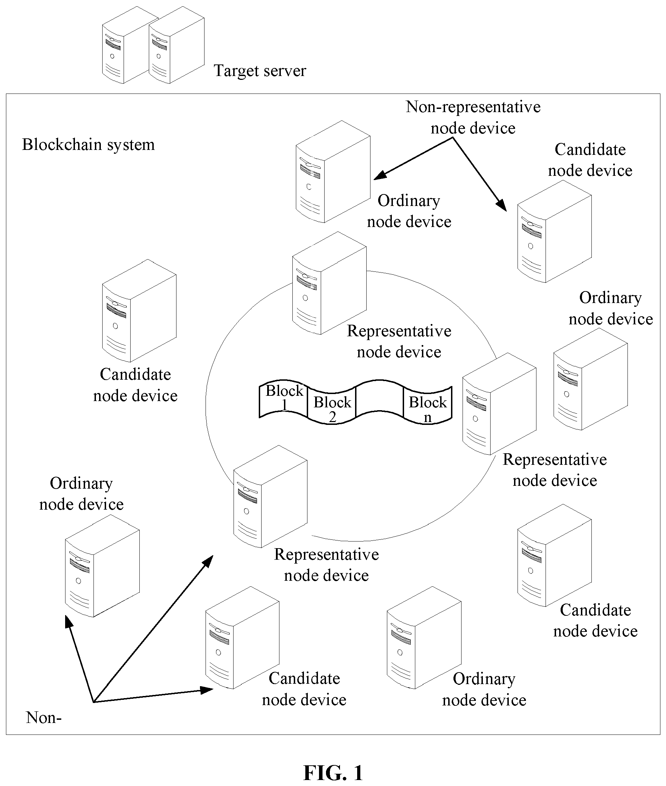

FIG. 1 is a schematic structural diagram of a blockchain system according to an embodiment of the present disclosure. Referring to FIG. 1, the blockchain system includes multiple node devices on which a same blockchain is configured. The multiple node devices may be multiple servers belonging to a same organization, multiple servers belonging to different organizations, or multiple terminals of a user. This is not limited in the embodiments of the present disclosure. The term "multiple" mentioned in the embodiments of the present disclosure refers to "more than one".

The multiple node devices each can receive transaction data. When the blockchain system uploads the transaction data to the blockchain, different nodes play different roles. Thus, the node devices may be classified into representative node devices and non-representative node devices. A representative node device is configured to generate a block and perform verification on the block by consensus. A non-representative node device is configured to receive the block verified by the representative node device by consensus, perform verification on the block, and store the verified block on a target blockchain. Depending on performances, the non-representative node devices may be classified into ordinary node devices and candidate node devices.

In addition, in the embodiments of the present disclosure, a target server is further provided. The target server may serve as an auditor, and is configured to receive a candidate application request transmitted by at least one node device in the blockchain system, perform a qualification audit on the node device in response to the candidate application request, and generate credential data. The target server may transmit the credential data to the audited node device, so that the node device, by means of the credential data that meets a preset rule, becomes the candidate node device of the representative node device in the blockchain system.

In some embodiments, an example of a process of recording transaction data in the blockchain system is as follows. In a case that any node device in the blockchain system receives the transaction data, the node device broadcasts the received transaction data in the blockchain system, so that other node devices receive the transaction data. After the representative node device in the blockchain system receives the transaction data, the representative node device generates a block based on the transaction data, so that representative node devices perform verification on the block by consensus. After the representative node devices verify the block by consensus, the representative node device broadcasts the block in the blockchain system. After receiving the block broadcasted by the representative node device, the non-representative node device performs verification on the block. After being verified, the block is stored on the target blockchain configured on the non-representative node device.

The consensus described in the embodiments of the present disclosure indicates that multiple node devices in the blockchain system separately perform verification on data. In a case that verification performed by any node device succeeds, a verification success message is broadcasted in the blockchain system. In a case that the verification success message received by any node device meets a preset consensus policy, it is determined that the data is verified by consensus.

For example, descriptions are provided by an example in which verification by consensus is performed by the representative node devices in the blockchain system. The verification by consensus may be performed through the proof of work (POW) mechanism. The process is described as follows. The representative node device in the blockchain system generates a block. The representative node device calculates a hash value of a block header of the generated block and determines whether the hash value is less than a current target value. In a case that the hash value is greater than the target value, the representative node device changes a random number in the generated block accordingly and recalculates the hash value. In a case that the hash value calculated by the representative node device is less than the target value, the representative node device broadcasts a first block to other representative node devices or broadcast the first block in the blockchain system. Other representative node devices perform verification on the first block after receiving the first block. In a case that most of the other representative node devices all agree with validity of the first block, the first block is verified by consensus.

In the system provided in the embodiments of the present disclosure, it is unnecessary to check whether transaction data can be stored after all node devices in the blockchain system generate a block and most of the node devices in the blockchain system reach a consensus on the generated block. In fact, the representative node devices generate a block and perform verification on the block by consensus, and the non-representative node device completes verification, so that transaction data can be recorded in the blockchain system, thereby improving working efficiency of the blockchain system.

Further, to illustrate a process of electing a representative node device in the blockchain system, descriptions are provided below by a specific embodiment.

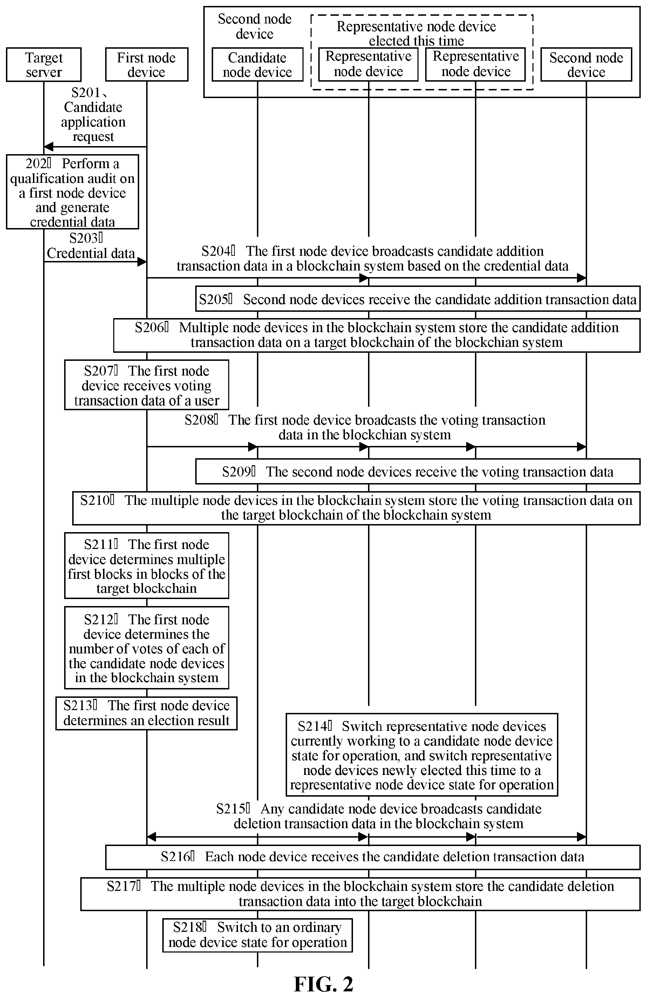

FIG. 2 is a flowchart of a method for electing a representative node device according to an embodiment of the present disclosure. Referring to FIG. 2, the method according to this embodiment of the present disclosure includes the following steps S201 to S218.

In S201, a first node device transmits a candidate application request to a target server. The candidate application request carries qualification information of the first node device.

The first node device is any node device in the blockchain system. The target server may be one or more servers in the blockchain system, or one or more servers outside the blockchain system. The target server may be provided with at least one terminal device. A user functioning as an auditor may log in to the terminal device to perform a qualification audit on the node device in the blockchain system. It may be understood that the target server may be any node device in the blockchain system, or a server of a third-party organization associated with the blockchain system.

The first node device transmits the candidate application request to the target server, so that the target server performs a qualification audit on the first node device based on the qualification information carried in the candidate application request, to check whether the first node device can become a candidate node device.

The qualification information of the first node device carried in the candidate application request may include any one of the following: device performance of the first node device; a deposit of a preset amount that has been paid by the first node device to the target server; and a credit value of a user account corresponding to the first node device. Practically, the qualification information may include other content, and this is not limited in this embodiment.

If the blockchain system currently subjects to a first election, the first node device may be a non-representative node device. If the blockchain system does not subject to the first election currently, the first node device is any ordinary node device. That is, the first node device is neither a representative node device, nor a candidate node device.

In S202, the target server, after receiving the candidate application request, performs a qualification audit on the first node device; and generates credential data in a case that the first node device meets a qualification requirement for a candidate node device.

In this case, the first node device may be referred to as a first target node device. That is, in a case that the first target node device meets the qualification requirement for the candidate node device, the credential data is generated. The credential data may indicate that the first target node device meets the qualification requirement for the candidate node device.

The target server may transmit, after receiving the candidate application request, the qualification information carried in the candidate application request to at least one terminal device configured on the target server, so that the user performs a qualification audit on the node device through the terminal device.

The qualification audit is performed as follows. When the qualification information meets the qualification requirement for the candidate node device, the audit is passed. For example, the audit is passed in a case that device performance of the node device meets a preset performance condition; or the audit is passed in a case that the node device has paid a deposit of a preset amount; or the audit is passed in a case that credit of a user corresponding to the node device meets a preset credit condition. In a case that the first node device passes the qualification audit, the first node device is eligible to become the candidate node device. It may be understood that the first target node device may be any node device in the blockchain system. If the first target node device meets the qualification requirement for the candidate node device, the first target node device may be the first node device.

In a case that the qualification audit on the first node device (the first target node device) is passed, credential data is generated by the terminal device. The credential data may include a consent identifier, generation time of a credential, a validity period of the credential, and a signature of the user. It may be understood that the target server may transmit, after receiving the candidate application request, qualification information carried in the candidate application request to multiple terminal devices configured on the target server, so that multiple users perform a qualification audit on the node device through the terminal devices. In addition, the credential data may include multiple consent identifiers, generation time of multiple credentials, validity periods of the multiple credentials, and signatures of the multiple users. The consent identifier indicates that the user agrees that the first node device can become the candidate node device. The validity period may be utilized for performing verification on validity of the credential data, thereby preventing a non-candidate node device from becoming a representative node device by means of credential data maliciously obtained. The signature is a signature added by the user to the qualification information. In a case that the qualification audit on the first node device is not passed, the terminal device may not generate credential data. The terminal device transmits the generated credential data to the target server. The target server summarizes all pieces of credential data. Alternatively, the terminal device may feed back an audit result only to the target server. The target server generates credential data based on the audit result of the terminal device participating in the audit.

Alternatively, the target server may perform a qualification audit on the first node device. In a case that the first node device passes the qualification audit performed by the target server, credential data is generated by the target server. The credential data includes: a consent identifier, generation time of a credential, a validity period of the credential, and a signature of the target server. The signature refers to a signature added by the target server to the qualification information for the first node device by utilizing a private key of the target server.

The target server may perform an audit off-line or on-line. In a case that the audit is performed off-line, an on-line operation of the target server is not affected, and the qualification information is processed and analyzed manually, so that effectiveness and credibility of the audit can be improved. In a case that the audit is performed on-line, a real-time property of the audit is improved, and labor costs are reduced.

In S203, the target server transmits the credential data to the first node device.

The target server transmits the credential data to the first node device, so that the first node device initiates a candidate addition transaction in the blockchain system based on the credential data.

In S204, the first node device broadcasts candidate addition transaction data in the blockchain system based on the credential data. The candidate addition transaction data includes the credential data and a list of candidate node devices. The list of candidate node devices includes multiple first target node devices, and the credential data includes credential data corresponding to multiple first target node devices.

The first node device initiates a candidate addition transaction in the blockchain system, so that the first node device may become a candidate node device. All node devices in the blockchain system receive the broadcasted candidate addition transaction data.

In this embodiment of the present disclosure, an example in which the first node device applies to become the candidate node device, and the first node device transmits the candidate addition transaction data is utilized for description. In some embodiments, any node device in the blockchain system may transmit the candidate addition transaction data, and the candidate addition transaction data may be received by any node device in the blockchain system. Specific implementations are not limited in the embodiments of this application.

In S205, second node devices receive the candidate addition transaction data.

The second node devices are node devices other than the first node device. The terms "first", "second", and "third" and so on described in the embodiments of the present disclosure are intended to distinguish different node device, rather than distinguish functions of the node devices.

In S206, multiple node devices in the blockchain system store the candidate addition transaction data into a target blockchain of the blockchain system in a case that the multiple node devices in the blockchain system verify the candidate addition transaction data by consensus.

In the embodiment of the present disclosure, the multiple node devices verifying the candidate addition transaction data by consensus may include that multiple representative node devices in the blockchain system verify the candidate addition transaction data by consensus. The multiple representative node devices in the blockchain system may be multiple representative node devices among the second node devices. The multiple representative node devices may perform verification on the candidate addition transaction data in at least one of the following verification manners:
(1) A representative node device performs verification on validity of the candidate addition transaction data based on whether the credential data include a preset number of consent identifiers. In a case that the credential data includes the preset number of consent identifiers, the representative node device determines that the candidate addition transaction data is valid. In a case that the number of representative node devices determining that the candidate addition transaction data is valid among the multiple representative node devices meets a preset consensus reaching condition, a consensus is reached. The preset consensus reaching condition may include that: all the representative node devices determine validity or a preset number or a preset ratio of representative node devices among all representative node devices determine validity, and this is not limited in the embodiment of the present disclosure.
(2) A representative node device verifies validity of the candidate addition transaction data based on a validity period of the credential data. In a case that the validity period of the credential data does not expire, the representative node device determines that the candidate addition transaction data is valid. When multiple representative node devices determine that the candidate addition transaction data is valid, a consensus is reached. The credential data may include multiple validity periods, and the validity periods may be inconsistent. A validity period that expires earliest among the multiple validity periods may be adopted to determine whether the candidate addition transaction data is valid.

For a blockchain system subjecting to a first election, a preset initial representative node device may function as a node device participating in a consensus process this time. Subsequently, multiple representative node devices are elected. The multiple elected representative node devices may be switched to a running state of a representative node device, to participate in a process of block generation and consensus of the entire blockchain system. A node device that is not elected as a representative node device is in a running state of a non-representative node device, and does not participate in the process of block generation and consensus of the entire blockchain system.

In the foregoing steps S201 to S206, multiple candidate node devices in the blockchain system are determined according to the qualification audit performed on the node devices in the blockchain by the target server.

In this case, any node device in the entire blockchain system knows an identity of the first target node device as the candidate node device. Therefore, in the blockchain system, an election may be performed on the multiple candidate node devices indicated by the candidate addition transaction data, that is, the multiple first target node devices, to elect a representative node device.

Any node device in the blockchain may participate in an election of the representative node device according to the candidate addition transaction data stored on the target blockchain.

A specific election process is described as follows.

In S207, the first node device receives voting transaction data of a user.

Transaction data in the blockchain system may include voting transaction data and other transaction data. The voting transaction data may be generated based on a voting target of a user in the blockchain system. The voting transaction data may include: a transaction type, a list of node devices to be voted, a private key signature of a voting user, and the like.

In this embodiment, a voting target of a user is the candidate node device stored in the blockchain system.

In this embodiment of the present disclosure, a process of electing a representative node device is described by an example in which a user votes by logging in to the first node device to elect a representative node device. Alternatively, a user may log in to another node device of the blockchain system to vote, and this is not limited in the present disclosure.

In S208, the first node device broadcasts the voting transaction data in the blockchain system.

In S209, the second node devices receive the voting transaction data.

In S210, the second node devices receive the voting transaction data for candidate node devices; in a case that the multiple node devices in the blockchain system verify the voting transaction data by consensus, the voting transaction data is stored on the target blockchain of the blockchain system.

In this embodiment of the present disclosure, the multiple node devices verifying the voting transaction data by consensus may include that multiple representative node devices currently working in the blockchain system verify the voting transaction data by consensus.

In S211, in a case that the number of generated blocks reaches a second preset number, the first node device determines multiple first blocks from blocks of the target blockchain. The multiple first blocks are configured to store the voting transaction data of the candidate node devices.

In S211, the first node device may search the blocks of the target blockchain based on a voting transaction type, to obtain a block storing the voting transaction type as the first block.

In this embodiment of the present disclosure, multiple elections may be performed during an operation process of the blockchain system, to avoid a system operation problem caused by an exception of a specific representative node device, for example, a specific representative node device operating in an abnormal state or having a credit problem, thereby ensuring stable operation of the blockchain system based on the representative node device.

An election is performed only when the number of the generated blocks reaches the second preset number, so that a switching frequency of a representative node device, that is, how often a representative node device is switched, can be ensured, thereby avoiding frequent switching of the representative node device and avoiding affecting normal operation of the entire blockchain system. The generated blocks are blocks generated after a previous election.

It may be understood that the generated blocks not only include blocks generated based on voting transaction data, but also include blocks generated based on other transaction data. Practically, the generated blocks may further include blocks generated based on voting transaction data and other transaction data. Details are not described in this embodiment of the present disclosure.

All the node devices in the blockchain system execute step S211, and details are not described in this embodiment of the present disclosure.

In S212, the first node device determines, according to the voting transaction data stored in the multiple first blocks, the number of votes of each of the candidate node devices in the blockchain system.

The voting transaction data includes a transaction type, a list of node devices to be voted, a private key signature of a voting user, and the like. Therefore, according to the voting transaction data stored on respective first blocks, the number of votes obtained by each node device may be counted.

In this embodiment of the present disclosure, in the blockchain system, voting is performed in an incremental voting manner. The incremental voting refers to indicating a node device to be voted in a voting transaction and reserving historical voting results. For example, a user has voted for three node devices A, B and C, and an object of this voting is a node device D. During this voting, the user may directly vote for the node device D. A list of node devices to be voted in the voting transaction data carries a public key of the node device D. That is, the user votes for, through multiple rounds of voting, the four node devices A, B, C, and D.

Based on the foregoing incremental voting manner, a vote for a node device to be voted may be withdrawn. For example, a user has already voted for three node devices A, B and C. If the user wants to withdraw the vote for the node device C next time, the user may directly indicate withdrawal of the vote for the node device C in the voting transaction data during next voting.

Another manner may be adopted during voting and vote counting, and this is not limited in the present disclosure.

Steps S211 to S212 describe examples of how to obtain the voting transaction data corresponding to the candidate node devices. Another manner may be adopted in this process, and this is not limited in the present disclosure.

In S213, the first node device determines an election result in a descending order of the numbers of votes. The election result includes public keys of a third preset number of representative node devices in the blockchain system and the number of votes of each representative node device.

The third preset number may be equal to the number of representative node devices currently working. That is, the third preset number is set, so that the representative node devices currently working can all be replaced with the elected representative node devices. Alternatively, the third preset number may be changed. For example, the third preset number may be changed according to the number of node devices in the blockchain system. In a case that the number of the node devices is increased, the third preset number may be increased.

The first node device may determine whether it is a newly elected representative node device according to the determined election result. That is, any node device in the blockchain system may determine, according to an election result obtained through counting, whether it is a newly elected representative node device, and identities of other representative node devices that are newly elected this time.

Steps S212 to S213 describe an implementation of a process of determining, by the first node device according to the numbers of votes of the multiple candidate node devices, multiple representative node devices in the blockchain system. That is, a process of determining, according to the voting transaction data stored in the multiple first blocks, the third preset number of representative node devices in the blockchain system is described. Practically, another election manner may be adopted, and this is not limited in the present disclosure.

In S214, the representative node devices currently working are switched to a candidate node device state for operation, and the representative node devices that are newly elected this time are switched to a representative node device state for operation.

Steps S207 to S214 describe a representative node device election process of the blockchain system. The blockchain system may delete the candidate node device, and a specific deletion process is described as follows.

In S215, any candidate node device broadcasts candidate deletion transaction data in the blockchain system. The candidate deletion transaction data indicates that the candidate node device withdraws from the election.

In this case, a node device that meets a qualification requirement for a candidate node device and withdraws from the election may be referred to as a second target node device. That is, the candidate deletion transaction data indicates that the first target node device is deleted from the candidate node devices.

In a case that any candidate node device no longer wants to be elected as a representative node device, the candidate node device may initiate a candidate deletion transaction in the blockchain system. That is, candidate deletion transaction data is broadcasted, so that each node device no longer votes for the candidate node device in a next election, after receiving the transaction data.

In S216, each node device receives the candidate deletion transaction data.

In S217, in a case that multiple node devices in the blockchain system verify the candidate deletion transaction data by consensus, the multiple node devices in the blockchain system store the candidate deletion transaction data on the target blockchain.

When the representative node devices currently working in the blockchain system verify the candidate deletion transaction data by consensus, the representative node devices may package the candidate deletion transaction data and generate a block, and transmit the block to each non-representative node device. The non-representative node device stores the candidate deletion transaction data into the blockchain configured by the non-representative node device, so that all the node devices in the blockchain system maintain a list of candidate node devices together. Therefore, in the next election, the candidate node device loses qualification, and the user does not vote for the candidate node device.

In S218, the second target node device is switched to an ordinary node device state for operation.

The second target node has paid a deposit to the target server, to become a representative node device. However, at this point, the second target node device has been switched to the ordinary node device state, indicating that the second target node device cannot become a representative node device. In this case, the target server needs to refund the deposit paid by the candidate node device along an original path. That is, the method further includes: receiving target transaction data, the target transaction data being used for indicating to refund the deposit to an account of the second target node device. The target transaction data can be initiated by the target server as a node device in the blockchain system, or initiated by the target server through any node device in the blockchain system, and this is not limited in the embodiments of the present disclosure.

Steps S215 to S218 describe a candidate node device deletion process, and may be performed in any time period in which there is a candidate node device in the blockchain system. No limitation is imposed in this embodiment. In addition, the candidate node device may be deleted in another manner, and this is not limited in this embodiment.

According to the method provided in this embodiment of the present disclosure, a qualification audit is performed on node devices in the blockchain system by a target server, and credential data is transmitted to the audited node devices based on an audit result, to prove that the node devices may become candidate node devices. The node devices may initiate, based on the credential data, a candidate addition transaction in the blockchain system, and determine candidate node devices according to a preset rule, so that the blockchain system can elect representative nodes device only from the candidate node devices, thereby improving efficiency of an election for the representative node devices in the blockchain system.

Further, in the election process, the numbers of votes of respective node devices in the blockchain system are counted once a second preset number of blocks are generated, to elect representative node devices. In this way, a switching frequency of representative node devices can be controlled, so that the representative node devices are not frequently switched, and the blockchain system can normally operate. The representative node device replaces all the node devices in the blockchain system to generate a block and perform verification on the block by consensus, thereby not only improving the working efficiency of the blockchain system by avoiding a case that all the nodes devices perform the above process, but also ensuring qualification of the representative node devices, so that the blockchain system operates more efficiently. In addition, a candidate node device that does not meet the qualification requirement is deleted, thereby further ensuring qualification of the representative node devices, and thus improving working efficiency of the representative node devices.

In the foregoing embodiment, one target server is utilized to audit node devices in the blockchain system. In some embodiments, multiple target servers may be utilized to audit node devices in the blockchain system, as described below.

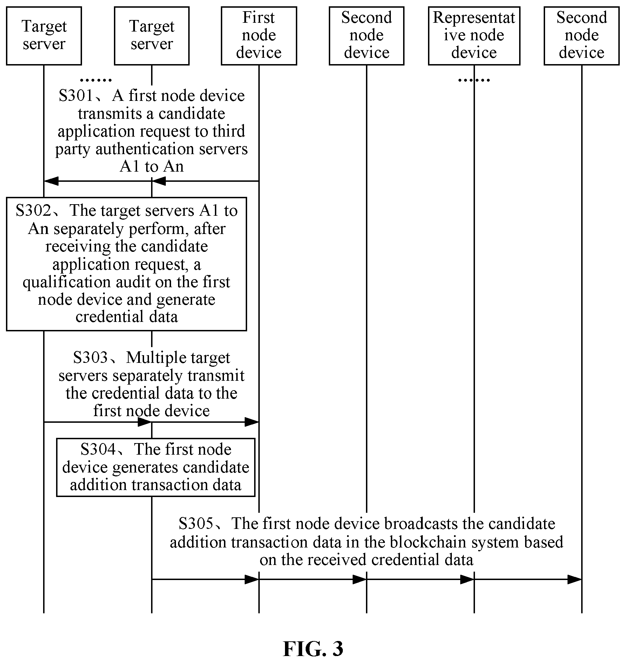

FIG. 3 is a flowchart of a qualification auditing process for a node device according to an embodiment of the present disclosure. Referring to FIG 3, the method according to this embodiment includes the following steps S301 to S305.

In S301, a first node device transmits a candidate application request to target servers A1 to An. The candidate application request carries qualification information of the first node device.

The target servers A1 to An are configured to perform a qualification audit on the node device in the blockchain system. If the target servers A1 to An perform verification on a node device and a verification result is positive, the first node device may be determined as a candidate node device. In this embodiment of the present disclosure, descriptions are provided by only an example in which multiple target servers perform a qualification audit together. In this embodiment, step S301 may be implemented in the following two manners.

In a first manner, the first node device transmits the candidate application request to one of the multiple target servers. The target server transmits the candidate application request to other target servers, so that other target servers can receive the candidate application request.

In a second manner, the first node device transmits the candidate application request to all of the multiple target servers, so that all the target servers can receive the candidate application request. Alternatively, the first node device may transmit the candidate application request to some of the target servers, and the target servers forward the received candidate application request to other target servers, so that the other target servers can receive the candidate application request. Specific transmitting manners are not limited in this embodiment of the present disclosure.

The candidate application request refers to a request through which the first node device applies to any target server for becoming a candidate device node. The qualification information of the first node device carried in the candidate application request may include any one of the following: device performance of the first node device; a deposit of a preset amount that has been paid by the node device to the target server; and a credit value of a user account corresponding to the first node device. Practically, the qualification information may include other content, and this is not limited in this embodiment

In S302, the target servers A1 to An separately perform a qualification audit on the first node device and generate credential data, after receiving the candidate application request.

After the target servers A1 to An audit the qualification information of the first node device, credential transaction data is generated respectively for the target servers which verify the qualification information. The credential data may include a consent identifier, generation time of a credential, a validity period of the credential, and a signature of the target server. The consent identifier refers to an identifier indicating that the target server consents that the first node device becomes the candidate node device. The validity period can prevent a non-candidate node device from becoming a representative node device by means of credential data that expires. The signature is a signature added by the target server to the qualification information by utilizing a private key of the target server. Alternatively, the credential data generated by the target server may be credential data generated based on audit results of terminal devices associated with the target servers, for example, step S202. Details are not provided in this embodiment of the present disclosure.

In S303, multiple target servers separately transmit the credential data to the first node device. The multiple target servers are servers of an auditor.

The multiple target servers separately transmit the credential data to the first node device, so that the first node device receives the credential data and initiates a candidate addition transaction to the blockchain system based on the credential data.

In some embodiments, one target server may be selected from the multiple target servers, and other target servers that verify the audit may transmit credential data generated by themselves to the selected target server. The target server summarizes all the pieces of credential data, and transmits the summarized credential data to the first node device.

In S304, the first node device broadcasts the candidate addition transaction data in the blockchain system based on the received credential data. The candidate addition transaction data includes the credential data and a list of candidate node devices.

The first node device initiates the candidate addition transaction to any node device of the blockchain system, so that the first node device may become a candidate node device.

Steps S301 to S304 describe a process in which multiple target servers perform an audit to determine whether a node device has a qualification of becoming a candidate node device. For a process in which the first node device becomes the candidate node device and a process of electing representative node devices in the blockchain system, one may refer to steps S205 to S218. Details are not provided herein.

In this embodiment, multiple target servers are configured to audit the node devices in the blockchain system, to avoid that the audit cannot be performed normally due to a fault of a specific target server. A qualification of a node device that passes the audit performed by the multiple target servers is more reliable.

All the foregoing optional technical solutions may be arbitrarily combined to form an optional embodiment of the present disclosure, and details are not described herein.

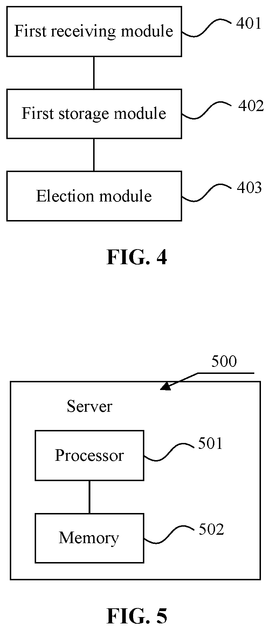

FIG. 4 is a schematic structural diagram of an apparatus for electing a representative node device according to an embodiment of the present disclosure. Referring to FIG. 4, the apparatus includes a first receiving module 401, a first storage module 402, and an election module 403.

The first receiving module 401 is connected to the first storage module 402 and is configured to receive candidate addition transaction data. The candidate addition transaction data carries credential data, and the credential data indicates that a first target node device meets a qualification requirement for a candidate node device.

The first storage module 402 is connected to the election module 403 and is configured to store the candidate addition transaction data on a target blockchain of the blockchain system in a case that multiple node devices in the blockchain system verify the candidate addition transaction data by consensus.

The election module 403 is configured to participate in an election of the representative node device according to the candidate addition transaction data stored on the target blockchain.

In an embodiment, the credential data includes signature data of multiple auditing users.

In an embodiment, the device further includes:
a transmitting module, configured to transmit a candidate application request to a target server, the candidate application request carrying qualification information of the node device.

In an embodiment, the target server is any node device in the blockchain system; or
the target server is a server of a third party organization associated with the blockchain system.

In an embodiment, the first target node device meets at least one of the following conditions:
device performance of the first target node device meets a preset performance condition;
the first target node device has paid a preset amount of deposit; and
credit of a user corresponding to the first target node device meets a preset credit condition.

In an embodiment, the multiple node devices in the blockchain system verifying the candidate addition transaction data by consensus includes that multiple representative node devices in the blockchain system verify the candidate addition transaction data by consensus.

In an embodiment, the device further includes:
a second receiving module, configured to receive candidate deletion transaction data, the candidate deletion transaction data indicating deleting a second target node device from the candidate node devices; and
a second storage module, configured to store the candidate deletion transaction data on the target blockchain of the blockchain system in a case that the multiple node devices in the blockchain system verify the candidate deletion transaction data by consensus.

In an embodiment, the device further includes:
a third receiving module, configured to receive target transaction data, the target transaction data being used for indicating to refund the deposit to an account of the second target node device.

According to the apparatus provided in this embodiment of the present disclosure, a qualification audit is performed on node devices in the blockchain system by an auditor, and credential data is transmitted to the audited node devices based on an audit result, to prove whether the node devices can become candidate node devices. The node devices may initiate, based on the credential data, a candidate addition transaction in the blockchain system, and determine candidate node devices according to a preset rule, so that the blockchain system can elect representative nodes device only from the candidate node devices, thereby improving efficiency of an election for the representative node devices in the blockchain system.

FIG. 5 is a schematic structural diagram of a server according to an embodiment of the present disclosure. The server 500 may vary due to different configurations or different performances, and may include one or more central processing units (CPUs) 501 and one or more memories 502. The memory 502 stores computer-readable instructions, and the computer-readable instructions are loaded and executed by the processor 501 to implement the methods according to the foregoing method embodiments. Practically, the server may further include components such as a wired or wireless network interface, a keyboard, and an input/output interface, to facilitate inputs/outputs. The server may further include another component configured to implement functions of a device, and details are not described herein.

In an exemplary embodiment, a computer-readable storage medium, for example, a memory including instructions, is further provided. The instructions may be executed by a processor in a terminal, to perform the method for electing a representative node device in the foregoing embodiments. For example, the computer-readable storage medium may be a read-only memory (ROM), a random access memory (RAM), a compact disc read-only memory (CD-ROM), a magnetic tape, a floppy disk, an optical data storage device, or the like.

A person of ordinary skill in the art may understand that all or some of the steps of the foregoing embodiments may be implemented by using hardware, or may be implemented by a program instructing relevant hardware. The program may be stored in a computer-readable storage medium. The above-mentioned storage medium may be a read-only memory, a magnetic disk, an optical disc, and the like.

The foregoing descriptions are merely preferred embodiments of the present disclosure, and are not intended to limit the present disclosure.

## Claims

1. A method for electing a representative node device in a blockchain system comprising a plurality of node devices, the method comprising:
receiving (S205), via broadcast from a first node device of the plurality of node devices by second node devices of the plurality of node devices, candidate addition transaction data, wherein the candidate addition transaction data carries credential data, and the credential data indicates that the first node device meets a qualification requirement for a candidate node device; and
participating, by the plurality of node devices, in an election of the representative node device according to the candidate addition transaction data,
**characterized by**
storing (S206), by multiple node devices in the blockchain system, the candidate addition transaction data on a target blockchain of the blockchain system in a case that the plurality of node devices in the blockchain system verify the candidate addition transaction data by consensus, wherein
the participating in the election of the representative node device is according to the candidate addition transaction data stored on the target blockchain, and the plurality of node devices in the blockchain system include multiple representative node devices in the blockchain system among the second node devices, wherein a representative node device performs verification on validity of the candidate addition transaction data based on whether the credential data includes a preset number of consent identifiers, in a case that the credential data includes the preset number of consent identifiers, the representative node device determines that the candidate addition transaction data is valid, and in a case that the number of representative node devices determining that the candidate addition transaction data is valid among the multiple representative node devices meets a preset consensus reaching condition, a consensus is reached, and the preset consensus reaching condition includes that: a preset ratio of representative node devices among all representative node devices determines validity; and
when the blockchain system is subjected to a first election, a preset initial representative node device of the plurality of node devices functions as a node device participating in a consensus process, subsequently, multiple representative node devices are elected, the multiple elected representative node devices are switched to a running state of the representative node device, to participate in a process of block generation and consensus of the entire blockchain system, and a node device that is not elected as the representative node device is in a running state of a non-representative node device, and does not participate in the process of block generation and consensus of the blockchain system;
after the storing the candidate addition transaction data on a target blockchain of the blockchain system, the method further comprises:
receiving (S216), by each of the node devices, of candidate deletion transaction data, wherein the candidate deletion transaction data indicates deleting a second target node device from the candidate node devices; and
storing (S217), by the multiple node devices in the blockchain system, the candidate deletion transaction data on the target blockchain of the blockchain system in a case that the plurality of node devices in the blockchain system verify the candidate deletion transaction data by consensus.

2. The method according to claim 1, wherein the credential data comprises signature data of a plurality of auditing users.

3. The method according to claim 1, wherein before the receiving candidate addition transaction data, the method further comprises:
transmitting, by the first node device, a candidate application request to a target server, wherein the candidate application request carries qualification information of the first node device.

4. The method according to claim 3, wherein the target server is any node device in the blockchain system; or
the target server is a server of a third party organization associated with the blockchain system.

5. The method according to claim 1, wherein the first node device meeting a qualification requirement for a candidate node device comprises at least one of the following: device performance of the first node device meeting a preset performance condition, the first node device having paid a preset amount of deposit, and credit of a user corresponding to the first node device meeting a preset credit condition.

6. The method according to claim 1, wherein the plurality of node devices in the blockchain system verifying the candidate addition transaction data by consensus comprises that a plurality of representative node devices in the blockchain system verify the candidate addition transaction data by consensus.

7. A blockchain system comprising a plurality of node devices, the plurality of node devices being configured to carry-out the method of any of the preceding claims.

## Patentansprüche

1. Verfahren zum Auswählen einer repräsentativen Knotenvorrichtung in einem Blockkettensystem, das eine Vielzahl von Knotenvorrichtungen umfasst, wobei das Verfahren Folgendes umfasst:
Empfangen (S205) von Kandidatenhinzufügungstransaktionsdaten durch zweite Knotenvorrichtungen der Vielzahl von Knotenvorrichtungen via Broadcast von einer ersten Knotenvorrichtung der Vielzahl von Knotenvorrichtungen, wobei die Kandidatenhinzufügungstransaktionsdaten Zugangsberechtigungsdaten enthalten und die Zugangsberechtigungsdaten anzeigen, dass die erste Knotenvorrichtung eine Qualifizierungsanforderung für einen Knotenvorrichtungskandidaten erfüllt; und
Teilnehmen an einer Auswahl der repräsentativen Knotenvorrichtung durch die Vielzahl von Knotenvorrichtungen gemäß den Kandidatenhinzufügungstransaktionsdaten,
**gekennzeichnet durch**
Speichern (S206) der Kandidatenhinzufügungstransaktionsdaten durch mehrere Knotenvorrichtungen im Blockkettensystem in einer Zielblockkette des Blockkettensystems in einem Fall, in dem die Vielzahl von Knotenvorrichtungen im Blockkettensystem die Kandidatenhinzufügungstransaktionsdaten durch einen Konsens verifizieren, wobei
das Teilnehmen an der Auswahl der repräsentativen Knotenvorrichtung gemäß den in der Zielblockkette gespeicherten Kandidatenhinzufügungstransaktionsdaten erfolgt und die Vielzahl von Knotenvorrichtungen im Blockkettensystem mehrere repräsentative Knotenvorrichtungen im Blockkettensystem unter den zweiten Knotenvorrichtungen beinhalten, wobei eine repräsentative Knotenvorrichtung an der Gültigkeit der Kandidatenhinzufügungstransaktionsdaten darauf basierend, ob die Zugangsberechtigungsdaten eine voreingestellte Anzahl von Einverständniskennungen beinhalten, eine Verifizierung durchführen, in einem Fall, in dem die Zugangsberechtigungsdaten die voreingestellte Anzahl von Einverständniskennungen beinhalten, die repräsentative Knotenvorrichtung bestimmt, dass die Kandidatenhinzufügungstransaktionsdaten gültig sind, und in einem Fall, in dem die Anzahl von repräsentativen Knotenvorrichtungen, die bestimmen, dass die Kandidatenhinzufügungstransaktionsdaten unter den mehreren repräsentativen Knotenvorrichtungen gültig sind, eine Konsenserreichungsbedingung erfüllt, ein Konsens erreicht wird und die voreingestellte Konsenserreichungsbedingung beinhaltet, dass: ein voreingestellter Anteil von repräsentativen Knotenvorrichtungen unter allen repräsentativen Knotenvorrichtungen eine Gültigkeit bestimmt; und
wenn das Blockkettensystem einer ersten Auswahl unterzogen wird, eine voreingestellte anfängliche repräsentative Knotenvorrichtung der Vielzahl von Knotenvorrichtungen als eine Knotenvorrichtung fungiert, die an einem Konsensprozess teilnimmt, nachfolgend mehrere repräsentative Knotenvorrichtungen ausgewählt werden, die mehreren ausgewählten repräsentativen Knotenvorrichtungen in einen Laufzustand der repräsentativen Knotenvorrichtung umgeschaltet werden, um an einem Prozess von Blockerzeugung und Konsens des gesamten Blockkettensystems teilzunehmen, und eine Knotenvorrichtung, die nicht als die repräsentative Knotenvorrichtung ausgewählt wird, sich in einem Laufzustand einer nicht repräsentativen Knotenvorrichtung befindet und am Prozess von Blockerzeugung und Konsens des Blockkettensystems nicht teilnimmt;
das Verfahren nach dem Speichern der Kandidatenhinzufügungstransaktionsdaten in einer Zielblockkette des Blockkettensystems ferner Folgendes umfasst:
Empfangen (S216) von Kandidatenlöschungstransaktionsdaten durch jede der Knotenvorrichtungen, wobei die Kandidatenlöschungstransaktionsdaten das Löschen einer zweiten Zielknotenvorrichtung aus den Knotenvorrichtungskandidaten anzeigen; und
Speichern (S217) der Kandidatenlöschungstransaktionsdaten durch die mehreren Knotenvorrichtungen im Blockkettensystem in der Zielblockkette des Blockkettensystems in einem Fall, in dem die Vielzahl von Knotenvorrichtungen im Blockkettensystem die Kandidatenlöschungstransaktionsdaten durch einen Konsens verifizieren.

2. Verfahren nach Anspruch 1, wobei die Zugangsberechtigungsdaten Signaturdaten einer Vielzahl von auditierenden Benutzern umfassen.

3. Verfahren nach Anspruch 1, wobei das Verfahren vor dem Empfangen von Kandidatenhinzufügungstransaktionsdaten ferner Folgendes umfasst:
Übertragen eines Anwendungsanforderungskandidaten durch die erste Knotenvorrichtung zu einem Zielserver, wobei der Anwendungsanforderungskandidat Qualifizierungsinformationen der ersten Knotenvorrichtung enthält.

4. Verfahren nach Anspruch 3, wobei der Zielserver eine beliebige Knotenvorrichtung im Blockkettensystem ist; oder
der Zielserver ist ein Server einer Drittanbieterorganisation, die mit dem Blockkettensystem verknüpft ist.

5. Verfahren nach Anspruch 1, wobei die erste Knotenvorrichtung, die eine Qualifizierungsanforderung für einen Knotenvorrichtungskandidaten erfüllt, mindestens eines von Folgendem umfasst: eine Vorrichtungsleistung der ersten Knotenvorrichtung erfüllt eine voreingestellte Leistungsbedingung, die erste Knotenvorrichtung hat einen voreingestellten Betrag einer Einlage bezahlt und ein Kredit eines Benutzers, der der ersten Knotenvorrichtung entspricht, erfüllt eine voreingestellte Kreditbedingung.

6. Verfahren nach Anspruch 1, wobei die Vielzahl von Knotenvorrichtungen im Blockkettensystem, die die Kandidatenhinzufügungstransaktionsdaten durch Konsens verifizieren, umfasst, dass eine Vielzahl von repräsentativen Knotenvorrichtungen im Blockkettensystem die Kandidatenhinzufügungstransaktionsdaten durch Konsens verifizieren.

7. Blockkettensystem, das eine Vielzahl von Knotenvorrichtungen umfasst, wobei die Vielzahl von Knotenvorrichtungen dazu ausgelegt sind, das Verfahren von einem der vorhergehenden Ansprüche umzusetzen.

## Revendications

1. Procédé pour élire un dispositif nœud représentatif dans un système de chaîne de blocs comprenant une pluralité de dispositifs nœuds, le procédé comprenant :
la réception (S205) par radio diffusion, en provenance d'un premier dispositif nœud de la pluralité de dispositifs nœuds par des deuxièmes dispositifs nœuds de la pluralité de dispositifs nœuds, de données de transaction d'ajout de candidat, dans lequel les données de transaction d'ajout de candidat transportent des données de justificatif d'identité, et les données de justificatif d'identité indiquent que le premier dispositif nœud satisfait à une exigence de qualification pour un dispositif nœud candidat ; et
la participation, par la pluralité de dispositifs nœuds, dans une élection du dispositif nœud représentatif selon les données de transaction d'ajout de candidat,
**caractérisé par**
le stockage (S206), par de multiples dispositifs nœuds dans le système de chaîne de blocs, des données de transaction d'ajout de candidat sur une chaîne de blocs cible du système de chaîne de blocs dans le cas où la pluralité de dispositifs nœuds dans le système de chaîne de blocs vérifie les données de transaction d'ajout de candidat par consensus, dans lequel
la participation à l'élection du dispositif nœud représentatif dépend des données de transaction d'ajout de candidat stockées sur la chaîne de blocs cible, et la pluralité de dispositifs nœuds dans le système de chaîne de blocs comportent de multiples dispositifs nœuds représentatifs dans le système de chaîne de blocs parmi les deuxièmes dispositifs nœuds, dans lequel un dispositif nœud représentatif réalise une vérification de la validité des données de transaction d'ajout de candidat selon que les données de justificatif d'identité comportent ou non un nombre prédéfini d'identifiants de consentement, et si les données de justificatif d'identité comportent le nombre prédéfini d'identifiants de consentement, le dispositif nœud représentatif détermine les données de transaction d'ajout de candidat comme étant valides, et dans le cas où le nombre des dispositifs nœuds représentatifs parmi les multiples dispositifs nœuds représentatifs déterminant les données de transaction d'ajout de candidat comme étant valides satisfait à une condition d'atteinte de consensus prédéfinie, un consensus est atteint, et la condition d'atteinte de consensus prédéfinie comporte ce qui suit : un rapport prédéfini de dispositifs nœuds représentatifs parmi tous les dispositifs nœuds représentatifs détermine la validité ; et
lorsque le système de chaîne de blocs est soumis à une première élection, un dispositif nœud initial prédéfini représentatif de la pluralité de dispositifs nœuds fonctionne comme un dispositif nœud participant à un processus de consensus, puis de multiples dispositifs nœuds représentatifs sont élus, les multiples dispositifs nœuds représentatifs élus sont commutés vers un état de fonctionnement du dispositif nœud représentatif pour participer à un processus de génération de blocs et à un consensus de la totalité du système de chaîne de blocs, et un dispositif nœud qui n'est pas élu comme dispositif nœud représentatif est dans un état de fonctionnement d'un dispositif nœud non représentatif et ne participe pas au processus de génération de blocs et au consensus du système de chaîne de blocs ;
après le stockage des données de transaction d'ajout de candidat sur une chaîne de blocs cible du système de chaîne de blocs, le procédé comprend en outre :
la réception (S216), par chacun des dispositifs nœuds, de données de transaction de suppression de candidat, dans lequel les données de transaction de suppression de candidat indiquent la suppression d'un deuxième dispositif nœud cible des dispositifs nœuds candidats ; et
le stockage (S217), par les multiples dispositifs nœuds dans le système de chaîne de blocs, des données de transaction de suppression de candidat sur la chaîne de blocs cible du système de chaîne de blocs dans le cas où la pluralité de dispositifs nœuds dans le système de chaîne de blocs vérifie les données de transaction de suppression de candidat par consensus.

2. Procédé selon la revendication 1, dans lequel les données de justificatif d'identité comprennent des données de signature d'une pluralité d'utilisateurs d'audit.

3. Procédé selon la revendication 1, dans lequel, avant la réception de données de transaction d'ajout de candidat, le procédé comprend en outre :
la transmission, par le premier dispositif nœud, d'une demande d'application de candidat à un serveur cible, dans lequel la demande d'application de candidat transporte des informations de qualification du premier dispositif nœud.

4. Procédé selon la revendication 3, dans lequel le serveur cible est un dispositif nœud quelconque dans le système de chaîne de blocs ; ou
le serveur cible est un serveur d'une organisation tierce associée au système de chaîne de blocs.

5. Procédé selon la revendication 1, dans lequel le premier dispositif nœud satisfaisant à une exigence de qualification d'un dispositif nœud candidat comprend au moins un des éléments suivants : une performance de dispositif du premier dispositif nœud satisfaisant à une condition de performance prédéfinie, le premier dispositif nœud ayant versé un montant de dépôt prédéfini, et le crédit d'un utilisateur correspondant au premier dispositif nœud satisfaisant à une condition de crédit prédéfinie.

6. Procédé selon la revendication 1, dans lequel la pluralité de dispositifs nœuds dans le système de chaîne de blocs vérifiant les données de transaction d'ajout de candidat par consensus comprennent la vérification des données de transaction d'ajout de candidat par consensus par une pluralité de dispositifs nœuds représentatifs dans le système de chaîne de blocs.

7. Système de chaîne de blocs comprenant une pluralité de dispositifs nœuds, la pluralité de dispositifs nœuds étant configurée pour mettre en œuvre le procédé de l'une des revendications précédentes.
